Europäisches Patentamt

European Patent Office

Office européen des brevets

(19)

(11) Numéro de publication : **0 161 701**
**B1**

# (12) FASCICULE DE BREVET EUROPÉEN

(45) Date de publication du fascicule du brevet :
**15.04.87**

(21) Numéro de dépôt : **85200554.5**

(22) Date de dépôt : **10.04.85**

(51) Int. Cl.⁴ : **H 01 M 4/42, C 22 C 1/04,
B 22 F 1/02**

(54) **Procédé pour préparer de la poudre de zinc pour batteries alcalines.**

(30) Priorité : **17.04.84 LU 85322**

(43) Date de publication de la demande :
**21.11.85 Bulletin 85/47**

(45) Mention de la délivrance du brevet :
**15.04.87 Bulletin 87/16**

(84) Etats contractants désignés :
**BE DE FR GB IT NL**

(56) Documents cités :
**EP-A- 0 091 659
DE-C- 26 208
FR-A- 646 885
FR-A- 2 244 272
FR-A- 2 456 582**

(73) Titulaire : **METALLURGIE HOBOKEN-OVERPELT
Société anonyme dite:
A. Greinerstraat, 14
B-2710 Hoboken (BE)**

(72) Inventeur : **Meeus, Marcel L.
Harkstraat 29
B-3900 Lommel (BE)**
Inventeur : **Strauven, Yvan A.J.
Hayenhoek 29
B-3580 Neerpelt (BE)**
Inventeur : **Groothaert, Luc A.J.
Fabriekstraat 74
B-3583 Overpelt (BE)**

(74) Mandataire : **Saelemaekers, Juul et al
METALLURGIE HOBOKEN-OVERPELT A. Greinerstraat 14
B-2710 Hoboken (BE)**

EP 0 161 701 B1

## Description

La présente invention se rapporte à un procédé pour préparer de la poudre à base de zinc et contenant du mercure pour batteries alcalines, suivant lequel on prépare, en partant d'un bain fondu homogène constitué de zinc, de mercure et, éventuellement, d'autres éléments, une poudre d'alliage dont les particules sont sensiblement homogènes.

Un tel procédé est décrit dans les demandes de brevet DE-A-2 441 356 et EP-A-0 089 608. Selon DE-A-2 441 356, on prépare de la poudre à base de zinc et contenant du mercure pour batteries alcalines en pulvérisant dans un courant gazeux un bain fondu homogène constitué de zinc, de mercure et, éventuellement, d'autres éléments. Selon EP-A-0 089 608, on prépare une telle poudre en granulant dans de l'eau un bain fondu homogène constitué de zinc et de mercure et en broyant les granules ainsi obtenus. Dans les deux cas on obtient donc une poudre d'alliage dont les particules ont sensiblement la même composition que celle du bain fondu et cette poudre d'alliage ou une fraction granulométrique de celle-ci constitue alors le produit final du procédé. Grâce à sa teneur en mercure, cette poudre d'alliage possède une excellente résistance à la corrosion dans l'électrolyte de la batterie alcaline, notamment lorsque sa teneur en mercure est de 5 à 7 % en poids, comme cela ressort de l'article « Zinc powder for alkaline dry batteries » par M. Meeus, L. Vos et L. Groothaert publié dans « Battery Material Symposium », Brussels 1983, Volume 1. On sait que la corrosion de la poudre de zinc dans une batterie alcaline va de pair avec un dégagement préjudiciable d'hydrogène. On sait également que la présence de mercure dans des batteries alcalines pose des problèmes d'ordre écologique.

Le but de la présente invention est de fournir un procédé tel que défini ci-dessus, permettant d'obtenir une poudre contenant moins de mercure, mais ayant une résistance à la corrosion en milieu alcalin aussi bonne que les poudres obtenues par les procédés connus ci-dessus.

Selon l'invention, on fait réagir la poudre d'alliage avec du mercure métallique et/ou avec un composé de mercure en produisant ainsi une poudre d'alliage enrichie en mercure. On soumet donc la poudre d'alliage à une amalgamation en surface.

Il est à remarquer qu'il est déjà connu de préparer de la poudre à base de zinc et contenant du mercure pour batteries alcalines en soumettant de la poudre de zinc exempt de mercure à une amalgamation en surface. Toutefois, la poudre obtenue par ce procédé requiert encore plus de mercure que celles obtenues par les procédés connus précités pour qu'elle ait une résistance suffisante à la corrosion en milieu alcalin.

Dans le procédé de l'invention, on opère avantageusement de manière que la teneur en mercure de la poudre d'alliage soit de 0,5 à 4 % en poids, de préférence de 0,5 à 2 %, que la réaction de la poudre d'alliage avec le mercure et/ou avec le composé de mercure ajoute à la poudre d'alliage de 0,5 à 3 % en poids de mercure, de préférence de 0,5 à 2 %, et que la teneur totale en mercure de la poudre d'alliage enrichie en mercure, c'est-à-dire du produit final, soit de 1 à 7 % en poids, de préférence de 1 à 4 %. La poudre ainsi obtenue possède une bonne résistance à la corrosion en milieu alcalin.

Pour soumettre la poudre d'alliage à l'amalgamation en surface, on peut utiliser les procédés, qui sont déjà connus pour amalgamer en surface de la poudre de zinc exempt de mercure, mais on peut également enrichir en mercure la poudre d'alliage en la mettant en présence de vapeur de mercure.

La présente invention se rapporte également à une poudre à base de zinc et contenant du mercure pour batteries alcalines.

Une telle poudre est connue par les demandes de brevet DE-A-2 441 356 et EP-A-0 089 608 précitées. Dans cette poudre connue les particules ont une composition sensiblement homogène. Lorsqu'il est présent en quantité suffisante, le mercure donne à cette poudre une excellente résistance à la corrosion dans l'électrolyte de la batterie alcaline.

Le but de la présente invention est de fournir une poudre telle que définie ci-dessus qui, tout en ayant globalement moins de mercure que la poudre connue ci-dessus, présente néanmoins une résistance à la corrosion en milieu alcalin aussi bonne que la poudre connue.

La poudre selon l'invention est caractérisée en ce que ses particules sont constituées d'un noyau présentant une répartition sensiblement homogène de mercure et d'une couche extérieure ayant une teneur en mercure plus élevée que le noyau.

Dans la poudre de l'invention, la teneur en mercure du noyau des particules est avantageusement de 0,5 à 4 % en poids, de préférence de 0,5 à 2 %, et la teneur totale en mercure est avantageusement de 1 à 7 % en poids, de préférence de 1 à 4 %.

Exemple 1

Cet exemple se rapporte à la préparation d'une poudre mercurifère à base de zinc pour batteries alcalines par le procédé de la présente invention.

On prépare un bain fondu de zinc contenant 1 % de mercure et 0,05 % de plomb. On homogénéise ce bain fondu à 450 °C par agitation. On fait s'écouler l'alliage fondu dans un jet d'air comprimé en produisant ainsi une poudre d'alliage dont les particules ont sensiblement la même composition homogène (Zn-1 Hg-0,05 Pb) que celle du bain fondu homogène.

On tamise la poudre d'alliage de manière à en séparer la fraction supérieure à 500 µm et, dans la

mesure du possible, la fraction inférieure à 75 μm. On obtient ainsi une poudre d'alliage d'une granulométrie de 75 à 500 μm.

On mélange la poudre d'alliage tamisée avec 1 % de mercure à la température ambiante dans un tambour rotatif. On obtient ainsi une poudre d'alliage enrichie en mercure ayant une teneur totale en mercure de 2 %. Les particules de cette poudre sont constituées d'un noyau et d'une couche extérieure ; le noyau présente une répartition sensiblement homogène de mercure et la couche extérieure a une teneur en mercure plus élevée que le noyau.

On examine la résistance de cette poudre à la corrosion en milieu alcalin. On utilise à cet effet un électrolyte constitué de 480 g de KOH, 60 g de ZnO et 460 ml d'eau distillée. On introduit 25 g de la poudre dans 150 ml de cet électrolyte, que l'on maintient à 45 °C, et on détermine la quantité d'hydrogène qui se dégage de l'électrolyte en 45 heures. On trouve que la vitesse de dégagement gazeux (« gassing rate ») est de 2,03 μl (microlitre) par gramme de poudre et par jour.

Exemple 2

Cet exemple se rapporte également à la préparation d'une poudre mercurifère à base de zinc pour batteries alcalines par le procédé de la présente invention.

On opère de la même façon que dans l'exemple 1, mais, au lieu de mélanger la poudre d'alliage tamisée avec 1 % de mercure, on la mélange avec 2 % de mercure. On obtient ainsi une poudre d'alliage enrichie en mercure ayant une teneur totale en mercure de 3 %.

On trouve une vitesse de dégagement gazeux de 1,88 μl/g/jour.

Exemple 3

Cet exemple se rapporte à la préparation d'une poudre mercurifère à base de zinc pour batteries alcalines par le procédé selon la demande de brevet DE-A-2 441 356 précitée.

On opère de la même façon que dans l'exemple 2, mais, au lieu de préparer un bain fondu à 1 % de mercure on prépare un bain fondu à 3 % de mercure et on en mélange pas la poudre d'alliage tamisée avec du mercure.

On trouve une vitesse de dégagement gazeux de 2,94 μl/g/jour.

Exemple 4

Cet exemple se rapporte à la préparation d'une poudre mercurifère à base de zinc pour batteries alcalines par le procédé de l'art antérieur précité, qui consiste à soumettre une poudre de zinc exempt de mercure à une amalgamation en surface.

On opère de la même façon que dans l'exemple 2, mais on prépare maintenant un bain fondu exempt de mercure et, au lieu de mélanger la poudre tamisée avec 2 % de mercure, on la mélange avec 3 % de mercure.

On trouve une vitesse de dégagement gazeux de 4,12 μl/g/jour.

La comparaison des exemples ci-dessus montre que le mercure, lorsqu'il a été introduit dans la poudre de zinc en partie par le bain fondu de départ et en partie par amalgamation en surface, protège beaucoup mieux cette poudre contre la corrosion en milieu alcalin que lorsqu'il a été introduit dans la poudre soit entièrement par le bain fondu de départ, soit entièrement par amalgamation en surface. Il y a donc une synergie entre le mercure introduit dans la poudre par le bain fondu de départ et celui introduit dans la poudre par amalgamation en surface.

Il est à noter que les poudres préparées dans les exemples ci-dessus contiennent 0,05 % de plomb. La raison en est que le plomb retarde également la corrosion du zinc. Il le fait toutefois dans une moindre mesure que le mercure. D'autres éléments tels que Au, Ag, Cd, In, Tl, Bi et Ga le font aussi. En somme, tout élément, dont la présence dans le zinc augmente la surtension sur celui-ci de l'hydrogène, retarde la corrosion du zinc et peut être utilisé dans le procédé et la poudre de la présente invention. On peut donc incorporer dans la poudre, outre le mercure, au moins un des éléments précités. Cela peut se faire *via* le bain fondu de départ comme dans les exemples ci-dessus, mais cela peut se faire également pendant l'étape de l'amalgamation en surface, si on utilise du mercure liquide contenant le ou les éléments en question pour effectuer cette amalgamation. Cela peut se faire également *via* les deux voies. Cela peut se faire, en outre, par la mise en contact de la poudre d'alliage, avant ou après son enrichissement en mercure, avec une solution contenant au moins un des éléments précités à l'état de composé, c'est-à-dire par cémentation de l'élément ou des éléments en question sur la poudre d'alliage, qui doit encore être enrichie en mercure ou qui l'est déjà.

Il est également à noter qu'on a tamisé dans les exemples ci-dessus de manière à obtenir une granulométrie de 75-500 μm pour la simple raison que beaucoup de fabricants de batteries demandent une telle granulométrie. D'autres fabricants de batteries demandent cependant d'autres granulométries telles que, par exemple, 125-500 μm et 75-420 μm. La granulométrie mentionnée dans l'exemple 1 n'est donc nullement limitative pour le procédé et la poudre de l'invention.

Dans l'exemple 1 on a tamisé la poudre d'alliage avant de l'amalgamer en surface. Au lieu de tamiser avant l'amalgamation en surface, on peut également le faire après l'amalgamation en surface. On peut également utiliser d'autres techniques de classement granulométrique que le tamisage. Ce classement granulométrique est d'ailleurs superflu, si la technique utilisée pour transformer le bain fondu de départ en poudre d'alliage donne immédiatement la granulométrie voulue. Le tamisage pratiqué dans l'exemple 1 n'a donc rien à voir avec l'essence de la présente invention.

Finalement, il est à noter que l'on préfère préparer la poudre d'alliage en pulvérisant le bain fondu dans un courant gazeux, parce qu'on obtient ainsi une poudre qui est pratiquement exempte d'oxyde et qui présente une bonne granulométrie et une bonne morphologie.

## Revendications

1. Procédé pour préparer une poudre à base de zinc et contenant du mercure pour batteries alcalines, suivant lequel on prépare, en partant d'un bain fondu homogène constitué de zinc, de mercure et, éventuellement, d'autres éléments, une poudre d'alliage dont les particules sont sensiblement homogènes, ce procédé étant caractérisé en ce qu'on fait réagir la poudre d'alliage avec du mercure métallique et/ou avec un composé de mercure, en produisant ainsi une poudre d'alliage enrichie en mercure.

2. Procédé selon la revendication 1, caractérisé en ce qu'on prépare une poudre d'alliage ayant 0,5 à 4 % en poids de mercure.

3. Procédé selon la revendication 2, caractérisé en ce qu'on prépare une poudre d'alliage ayant 0,5 à 2 % en poids de mercure.

4. Procédé selon l'une des revendications 1 à 3, caractérisé en ce qu'on fait réagir la poudre d'alliage avec du mercure métallique et/ou avec un composé de mercure de manière à y ajouter 0,5 à 3 % en poids de mercure.

5. Procédé selon la revendication 4, caractérisé en ce qu'on ajoute à la poudre d'alliage 0,5 à 2 % en poids de mercure.

6. Procédé selon l'une des revendications 1 à 5, caractérisé en ce qu'on opère de manière à produire une poudre d'alliage enrichie en mercure ayant une teneur totale en mercure de 1 à 7 % en poids.

7. Procédé selon la revendication 6, caractérisé en ce qu'on opère de manière à produire une poudre d'alliage enrichie en mercure ayant une teneur totale en mercure de 1 à 4 % en poids.

8. Procédé selon l'une des revendications 1 à 7, caractérisé en ce qu'on enrichit la poudre d'alliage en mercure en la mettant en présence de vapeur de mercure.

9. Procédé selon l'une des revendications 1 à 7, caractérisé en ce qu'on fait réagir la poudre d'alliage avec du mercure liquide contenant au moins un des éléments Au, Ag, Pb, Cd, In, Tl, Bi, Ga.

10. Procédé selon l'une des revendications 1 à 9, caractérisé en ce qu'on dépose sur la poudre d'alliage, avant ou après son enrichissement en mercure, au moins un des éléments Au, Ag, Pb, Cd, In, Tl, Bi et Ga par cémentation.

11. Poudre susceptible d'être obtenue par un procédé selon l'une des revendications 1 à 10.

12. Poudre à base de zinc et contenant du mercure pour batteries alcalines, caractérisée en ce que ses particules sont constituées d'un noyau présentant une répartition sensiblement homogène de mercure et d'une couche extérieure ayant une teneur en mercure plus élevée que le noyau.

13. Poudre selon la revendication 12, caractérisée en ce que le noyau de ses particules a une teneur en mercure de 0,5 à 4 % en poids.

14. Poudre selon la revendication 13, caractérisée en ce que le noyau a une teneur en mercure de 0,5 à 2 % en poids.

15. Poudre selon l'une des revendications 12 à 14, caractérisée en ce que sa teneur totale en mercure est de 1 à 7 % en poids.

16. Poudre selon la revendication 15, caractérisée en ce que sa teneur totale en mercure est de 1 à 4 % en poids.

## Claims

1. A process for preparing a zinc base powder containing mercury for alkaline batteries, according to which an alloy powder with substantially homogeneous particles is prepared starting from a homogeneous molten bath composed of zinc, mercury and possibly other elements, this process being characterized in that the alloy powder is made to react with metallic mercury and/or with a mercury compound, thereby producing an alloy powder enriched with mercury.

2. A process according to claim 1, characterized in that an alloy powder is prepared with a mercury content of 0.5 to 4 % in weight.

3. A process according to claim 2, characterized in that an alloy powder is prepared with a mercury content of 0.5 to 2 % in weight.

4. A process according to any of the claims 1 to 3, characterized in that the alloy powder is made to react with metallic mercury and/or with a mercury compound so as to add thereto 0.5 to 3 % in weight of mercury.

5. A process according to claim 4, characterized in that 0.5 to 2 % in weight of mercury is added to the alloy powder.

6. A process according to any of the claims 1 to 5, characterized in that one operates so as to produce an alloy powder enriched with mercury having a total mercury content of 1 to 7 % in weight.

7. A process according to claim 6, characterized in that one operates so as to produce an alloy powder enriched with mercury having a total mercury content of 1 to 4 % in weight.

8. A process according to any of the claims 1 to 7, characterized in that the alloy powder is enriched with mercury by putting it in the presence of mercury vapour.

9. A process according to any of the claims 1 to 7, characterized in that the alloy powder is made to react with liquid mercury containing at least one of the elements Au, Ag, Pb, Cd, In, Tl, Bi, Ga.

10. A process according to any of the claims 1 to 9, characterized in that at least one of the elements Au, Ag, Pb, Cd, In, Tl, Bi and Ga is deposited by cementation on the alloy powder, either before or after its enrichment with mercury.

11. Powder obtainable by a process according to any of the claims 1 to 10.

12. Zinc base powder containing mercury for alkaline batteries, characterized in that its particles are composed of a core presenting a substantially homogeneous mercury distribution and of an outer layer having a higher mercury content thant the core.

13. Powder according to claim 12, characterized in that the core of its particles has a mercury content of 0.5 to 4 % in weight.

14. Powder according to claim 13, characterized in that the core has a mercury content of 0.5 to 2 % in weight.

15. Powder according to any of the claims 12 to 14, characterized in that its total mercury content ranges from 1 to 7 % in weight.

16. Powder according to claim 15, characterized in that its total mercury content ranges from 1 to 4 % in weight.

**Patentansprüche**

1. Verfahren zur Herstellung eines Pulvers auf Basis von Zink mit einem Gehalt an Quecksilber für alkalische Batterien, bei dem man ausgehend von einem homogenen Schmelzbad, bestehend aus Zink, Quecksilber und gegebenenfalls anderen Elementen, ein Legierungspulver herstellt, dessen Teilchen wesentlich homogen sind, dadurch gekennzeichnet, daß man das Legierungspulver mit metallischem Quecksilber und/oder einer Verbindung des Quecksilbers reagieren läßt und auf diese Weise ein mit Quecksilber angereichertes Legierungspulver herstellt.

2. Verfahren nach Anspruch 1, dadurch gekennzeichnet, daß man ein Legierungspulver mit 0,5 bis 4 Gew.% Quecksilber herstellt.

3. Verfahren nach Anspruch 2, dadurch gekennzeichnet, daß man ein Legierungspulver mit 0,5 bis 2 Gew.% Quecksilber herstellt.

4. Verfahren nach einem der Ansprüche 1 bis 3, dadurch gekennzeichnet, daß man das Legierungspulver mit dem metallischen Quecksilber und/oder einer Verbindung des Quecksilbers in der Weise reagieren läßt, daß man 0,5 bis 3 Gew.% Quecksilber zugibt.

5. Verfahren nach Anspruch 4, dadurch gekennzeichnet, daß man dem Legierungspulver 0,5 bis 2 Gew.% Quecksilber zugibt.

6. Verfahren nach einem der Ansprüche 1 bis 5, dadurch gekennzeichnet, daß man in der Weise arbeitet, daß ein mit Quecksilber angereichertes Legierungspulver entsteht, das einen Gesamtgehalt an Quecksilber von 1 bis 7 Gew.% aufweist.

7. Verfahren nach Anspruch 6, dadurch gekennzeichnet, daß man in der Weise arbeitet, daß ein mit Quecksilber angereichertes Legierungspulver entsteht, das einen Gesamtgehalt an Quecksilber von 1 bis 4 Gew.% aufweist.

8. Verfahren nach einem der Ansprüche 1 bis 7, dadurch gekennzeichnet, daß man das Legierungspulver mit Quecksilber anreichert, indem man es in Gegenwart von Quecksilberdampf bringt.

9. Verfahren nach einem der Ansprüche 1 bis 7, dadurch gekennzeichnet, daß man das Legierungspulver mit flüssigem Quecksilber, enthaltend mindestens eines der Elemente Au, Ag, Pb, Cd, In, Tl, Bi, Ga, reagieren läßt.

10. Verfahren nach einem der Ansprüche 1 bis 9, dadurch gekennzeichnet, daß man auf dem Legierungspulver vor oder nach seiner Anreicherung mit Quecksilber mindestens eines des Elemente Au, Ag, Pb, Cd, In, Tl, Bi und Ga durch Zementation auflagert.

11. Pulver, daß nach einem Verfahren gemäß einem der Ansprüche 1 bis 10 hergestellt sein kann.

12. Pulver auf Basis von Zink mit einem Gehalt an Quecksilber für alkalische Batterien, dadurch gekennzeichnet, daß seine Teilchen bestehen aus einem Kern mit wesentlich homogener Verteilung des Quecksilbers und einer Außenschicht, deren Gehalt an Quecksilber höher als im Kern ist.

13. Pulver nach Anspruch 12, dadurch gekennzeichnet, daß der Kern seiner Teilchen einen Quecksilbergehalt von 0,5 bis 4 Gew.% aufweist.

14. Pulver nach Anspruch 13, dadurch gekennzeichnet, daß der Kern einen Quecksilbergehalt von 0,5 bis 2 Gew.% aufweist.

15. Pulver nach einem der Ansprüche 12 bis 14, dadurch gekennzeichnet, daß der Gesamtgehalt an Quecksilber 1 bis 7 Gew.% beträgt.

16. Pulver nach Anspruch 15, dadurch gekennzeichnet, daß der Gesamtgehalt an Quecksilber 1 bis 4 Gew.% beträgt.